# EUROPEAN PATENT APPLICATION

(11) **EP 2 133 227 A1**
(43) Date of publication of application: **16.12.2009**
(21) Application number: 08721195.9
(22) Date of filing: 03.03.2008
(51) Int. Cl.: B60J 1/00, B29C 45/14, B29L 31/30

(54) **GLASS WITH MOLDING AND METHOD OF PRODUCING THE SAME**

(30) Priority: 06.04.2007 JP 2007100466; 18.12.2007 JP 2007326465
(71) Applicant: Nippon Sheet Glass Company Limited, Tokyo 108-6321 (JP)
(72) Inventor: NAKAGAWA, Masafumi, Tokyo 108-6321 (JP); NAKAGAWA, Kiyomi, Hofu-shi Yamaguchi 747-0824 (JP); FUJIWARA, Kazuhiro, Kyoto-shi Kyoto 601-8206 (JP)
(74) Representative: Strobel, Wolfgang
(86) International application number: PCT/JP2008/053775
(87) International publication number: WO 2008/126505

(57) **Abstract**

Glass with molding, which does not require a holding pin, such as a metal pin, and a spacer. The glass (10) with molding includes a resin piece (13). The resin piece has an embedded section (15) embedded in resin molding (12), and also has a projection section (16) projecting from the resin molding in the direction away from a glass material (11). The projection section has an insert-molded metal nut (17). The glass with molding is fastened to a vehicle body (19) by screwing a screw (18) into the metal nut (17).

## Description

### TECHNICAL FIELD

The present invention relates to a molding-furnished glass wherein a resin piece is partially embedded in a resin molding, and to a method for producing the same.

### BACKGROUND ART

Molding-furnished glass wherein an edge of a glass base material is covered by a resin molding is generally used as window glass for vehicles. Examples include molding-furnished glass in which a rigid piece is embedded in the resin molding. The rigid piece has a threaded hole, and a screw extending from the vehicle body is threaded into the threaded hole, whereby the molding-furnished glass is secured directly to the vehicle body. Therefore, the rigid piece must not move when the resin is molded. A technique intended to prevent the rigid piece from moving is proposed in, e.g., Japanese Patent Application Laid-Open Publication No. 02-175419 (JP 02-175419 A).

FIGS. 16 and 17 hereof show the molding-furnished glass disclosed in JP 02-175419 A.

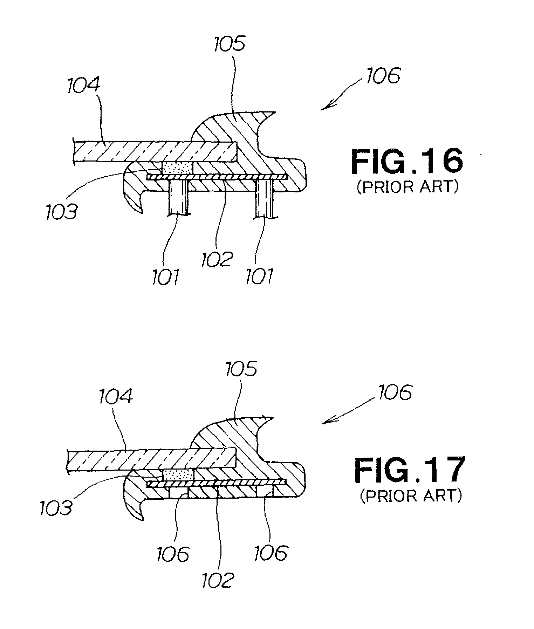

The following description is provided with reference made to FIG. 16. Metal pins 101, 101 are provided so as to project into a cavity, and a rigid piece 102 is mounted on the metal pins 101, 101. The rigid piece 102 is held against a glass base material 104, with a spacer 103 interposed therebetween. In this state, molten resin is injected into the cavity and caused to solidify, whereby a resin molding 105 is obtained.

Once the resin molding 105 has cured, the metal pins 101, 101 are withdrawn (downward in the drawing), and the mold is opened, thereby allowing a glass 106 with molding to be obtained.

As shown in FIG. 17, the rigid piece 102 is embedded in the resin molding 105 that covers the edge of the glass base material 104. Withdrawing the metal pins 101, 101 leaves removal holes 106, 106 (see FIG. 16). The removal holes 106, 106 must be filled with resin in order to prevent the ingress of water. This step makes the molding-furnished glass more expensive.

There is a tendency for molding defects to arise because the metal pins 101, 101 obstruct the flow of the molten resin, and eddies form around the metal pins 101, 101. When the size of the metal pins 101, 101 is reduced to prevent such events, the support given by the metal pins 101, 101 decreases, and the rigid piece 102 deflects to the side.

Accordingly, there is a demand for a molding technique with which removal holes and molding defects are of no concern.

### DISCLOSURE OF THE INVENTION

It is an object of the present invention to provide a molding technique that does not require metal pins or other holding pins, spacers, and the like.

### Means for Solving the Problems

According to one aspect of the present invention, there is provided a molding-furnished glass comprising: a glass base material; a resin molding covering an edge of the glass base material; and a resin piece partially embedded in the resin molding, **characterized in that** the resin piece has an embedded section embedded in the resin molding and a projection section projecting from the resin molding in a direction away from the glass base material, a female thread is disposed inside the projection section, and a hole for receiving a distal end of a screw to be threaded with the female thread is formed in the embedded section to extend toward the glass base material.

Preferably7, the embedded section has a flange adapted to be brought into firm contact with a mold when the resin molding is formed.

Desirably, the embedded section has an open space into which molten resin is directed when the resin molding is formed.

In a preferred form, the female thread is provided at an incline so that a central axis of the female thread will not be parallel to a direction in which a mold is opened.

The embedded section preferably has a projecting object formed so as to protrude from the embedded section.

The embedded section desirably has a boss for preventing molten resin from flowing into the hole that receives the distal end of the screw.

According to another aspect of the present invention, there is provided a molding-furnished glass comprising: a glass base material; a resin molding covering an edge of the glass base material; and a resin piece partially embedded in the resin molding, wherein the resin piece has a female thread and a hole for receiving a distal end of a screw for threading with the female thread, the hole being formed to extend toward the glass base material.

Preferably, the resin piece has a flange adapted to be brought into firm contact with a mold when the resin molding is formed.

Desirably, the resin piece has an open space into which molten resin is directed when the resin molding is formed.

In a preferred form, the female thread is provided at an incline so that a central axis of the female thread will not be parallel to a direction in which a mold is opened.

The resin piece preferably has a projecting object formed so as to protrude from the resin molding.

The resin piece desirably has a boss for preventing molten resin from flowing into the hole that receives the distal end of the screw.

According to yet another aspect of the present invention, there is provided a method for producing a molding-furnished glass comprised of a glass base material, a resin molding covering an edge of the glass base material, and a resin piece partially embedded in the resin molding, the method comprising the steps of: providing a resin piece having an embedded section to be embedded in the resin molding, and a projection section protruding from the resin molding in a direction away from the glass base material, wherein a female thread is disposed inside the projection section, and the embedded section has an open space into which molten resin is directed upon forming of the resin molding; positioning the resin piece in the mold such that a flange formed in the embedded section fits in a groove, and disposing the glass base material in a predetermined location in the mold; clamping the mold such that the resin piece and the glass base material come near to each other; and injecting molten resin into a cavity of the clamped mold, and causing the molten resin to solidify.

Preferably, chucking holes for holding the flange using suction are created on a bottom surface of the groove in the mold, and the step for positioning the resin piece in the mold comprises holding the flange by suction through the chucking holes, whereby the resin piece is secured to the mold.

According to still another aspect of the present invention, there is provided a method for producing a molding-furnished glass comprised of a glass base material, a resin molding covering edges of the glass base material, and a resin piece partially embedded in the resin molding, the method comprising the steps of: providing on the resin molding a resin piece having a female thread, and a hole for receiving a distal end of a screw threaded into the female thread, the hole being formed to face the glass base material; positioning the resin piece in a mold so that a flange formed in the resin piece fits in a groove, and disposing the glass base material in a predetermined location in the mold; clamping the mold so that the resin piece and the glass base material come near to each other; and injecting molten resin into a cavity of the clamped mold, and causing the molten resin to solidify.

Preferably, chucking holes for holding the flange using suction are created on a bottom surface of the groove in the mold, and the step for positioning the resin piece in the mold comprises holding the flange by suction though the chucking holes, whereby the resin piece is secured to the mold.

### Advantageous Effects of the Invention

According to one aspect of the present invention, it is not necessary to use holding pins or spacers. As a result, the assembly is readily positioned on the mold, and production costs can be minimized.

Since the embedded section has a flange adapted to be brought into firm contact with the mold when the resin molding is formed, the flange is held by the pressure of the resin when the resin molding is formed, and adheres to the mold. The gap between the mold and the flange disappears, and no concern arises that the molten resin will enter therein. The flange is a visible member, and its appearance is improved due to the absence of any escaped resin.

Since the embedded section has an open space into which molten resin is directed when the resin molding is formed, the open space can be filled by the resin, and the resin piece can be more firmly bonded to the resin molding. Specifically, there is no concern that the resin piece will separate from the resin molding.

The embedded section has a projecting object that protrudes from the embedded section. The projecting object is, e.g., a registering pin. If the registering pin or other projecting object is integrated with the resin piece, it will be possible to use fewer components.

Since the embedded section has a boss for preventing molten resin from flowing into the hole that receives the distal end of the screw, there is no concern that resin will flow into the hole that receives the distal end of the screw. Even if resin were to flow in, the amount would be insignificant. As a result, the hole that receives the distal end of the screw can be formed passing through the embedded section. If the hole is a through-hole, the structure of the mold for producing the resin piece can be simplified, and the resin piece can be produced less expensively.

Since the female thread is provided at an incline so that the central axis of the female thread will not be parallel to the direction in which the mold is opened, it is possible to set the orientation of the female thread as desired, allowing for increased latitude when designing the molding-furnished glass.

According to another aspect of the present invention, a female thread and a hole for receiving a distal end of a screw for threading into the female thread are formed in the resin piece, facing the glass base material. When the female thread is provided directly to the resin piece, it is possible to reduce the gap between the molding-furnished glass and a vehicle body. Reducing the gap between the molding-furnished glass and the vehicle body enables the appearance of the vehicle body to be improved.

Since the resin piece has a flange adapted to be brought into firm contact with a mold when the resin molding is formed, the flange is held by the pressure of the resin when the resin molding is formed, and adheres to the mold. The gap between the mold and the flange disappears, and no concern arises that the molten resin will enter therein. The flange is a visible member, and its appearance is improved due to the absence of any escaped resin.

Since the resin piece has an open space into which molten resin is directed when the resin molding is formed, the open space can be filled by the resin, and the resin piece can be more firmly bonded to the resin molding. Specifically, there is no concern that the resin piece will separate from the resin molding.

A projecting object protrudes from the resin piece. The projecting object is, e.g., a registering pin. If the registering pin or other projecting object is integrated with the resin piece, it will be possible to use fewer components.

Since the resin piece has a boss for preventing molten resin from flowing into the hole that receives the distal end of the screw, there is no concern that resin will flow into the hole that receives the distal end of the screw. Even if resin were to flow in, the amount would be insignificant. As a result, the hole that receives the distal end of the screw can be formed passing through the embedded section. If the hole is a through-hole, the structure of the mold for producing the resin piece can be simplified, and the resin piece can be produced less expensively.

According to yet another aspect of the present invention, metal pins for securing the resin piece are unnecessary. Since no metal pins are used, the resin is able to flow without obstruction, and there is no concern that molding defects will arise.

According to still another aspect of the present invention, a female thread and a hole for receiving a distal end of a screw for threading into the female thread are formed in the resin piece, facing the glass base material. When the female thread is provided directly to the resin piece, it is possible to reduce the gap between the molding-furnished glass and a vehicle body. Reducing the gap between the molding-furnished glass and the vehicle body enables the appearance of the vehicle body to be improved.

The chucking holes are used to hold the flange by suction, whereby the resin piece is secured to the mold. Since there is no concern that the resin piece will fall from the mold, the resin piece may be provided to a lower die, an upper die, or a side die so that the operation for molding the resin will be readily performed.

### BRIEF DESCRIPTION OF THE DRAWINGS

FIG. 1 is a front view of a molding-furnished glass according to a first embodiment of the present invention;
FIG. 2 is a cross-sectional view taken along line 2-2 of FIG. 1;
FIG. 3 is a perspective view of a resin piece according to the first embodiment;
FIG. 4 is a cross-sectional view taken along line 4-4 of FIG. 3;
FIG. 5 is a drawing showing a step for positioning the resin piece and a glass base material after a provision step;
FIG. 6 is a drawing showing a progression from a mold-clamping step to a resin injection step;
FIG. 7 is a cross-sectional view of a completed molding-furnished glass according to the first embodiment;
FIG. 8 is a cross-sectional view taken along line 8-8 of FIG. 7;
FIG. 9 is a cross-sectional view showing a resin piece according to a second embodiment;
FIG. 10 is a cross-sectional view showing a resin piece according to a third embodiment;
FIG. 11 is a cross-sectional view showing a resin piece according to a fourth embodiment;
FIG. 12 is a cross-sectional view showing a step for positioning the resin piece and a glass base material according to the fourth embodiment;
FIG. 13 is a cross-sectional view showing a progression according to the fourth embodiment from a mold-clamping step to a resin injection step;
FIG. 14 is a cross-sectional view showing a relationship between the molding-furnished glass according to the fourth embodiment and a vehicle body;
FIG. 15 is a cross-sectional view showing a molding-furnished glass according to a fifth embodiment;
FIG. 16 is a cross-sectional view of a conventional molding-furnished glass when being produced; and
FIG. 17 is a cross-sectional view of the molding-furnished glass produced as shown in FIG. 16.

### BEST MODE FOR CARRYING OUT THE INVENTION

Certain preferred embodiments of the present invention are described below with reference to the accompanying drawings.

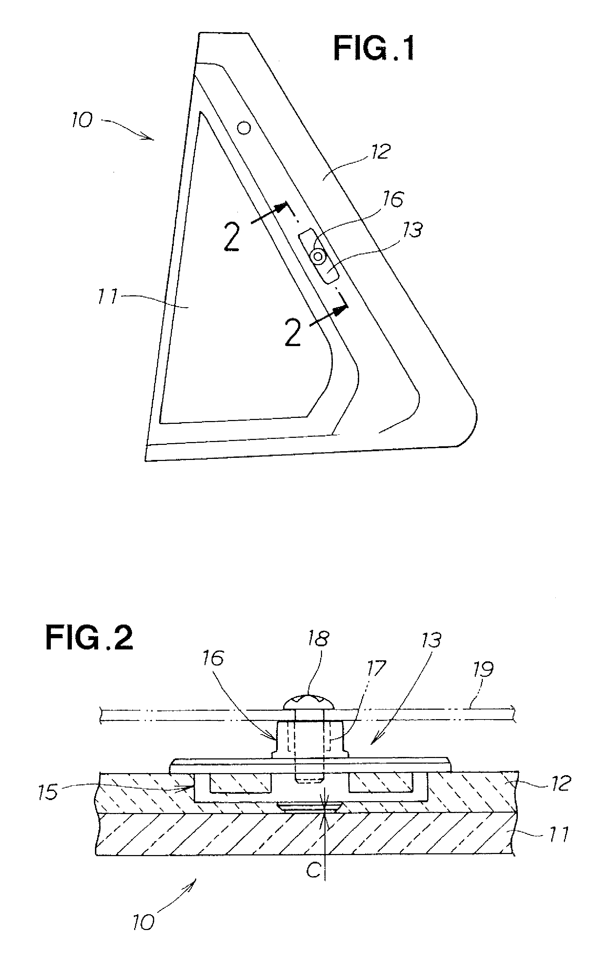

FIGS. 1 to 8 show a molding-furnished glass according to a first embodiment.

As shown in FIG. 1, a glass 10 with molding comprises a glass base material 11, a resin molding 12 covering an edge of the glass base material 11, and a resin piece 13 partially embedded in the resin molding 12.

The resin molding 12 is preferably made using, e.g., polyvinyl chloride (PVC), which has high heat resistance. The resin piece 13 is preferably made using, e.g., glass-fiber-reinforced polybutyl terephthalate (PBT), which has high rigidity.

As shown in FIG. 2, the resin piece 13 comprises an embedded section 15 embedded in the resin molding 12, and a projection section 16 protruding from the resin molding 12 in a direction leading away from the glass base material 11. A suitable gap C (approximately 0.5 mm) is left between the glass base material 11 and the embedded section 15. In other words, the embedded section 15 is fashioned not to touch the glass base material 11.

A metal nut 17, used as an example of a female thread, is insert-molded in the projection section 16. A screw 18 is threaded into the metal nut 17, whereby the glass 10 with molding is fastened to a vehicle body 19 shown by the imaginary line in the drawing.

It is possible to use a helisert, insert, or the like for the female thread instead of the metal nut 17. When a helisert or insert is used, assembly molding is performed instead of insert molding. In the embodiments discussed hereinbelow, examples are described in which the metal nut 17 is used for the female thread.

A detailed description will now be given for the structure of the resin piece 13 of the first embodiment.

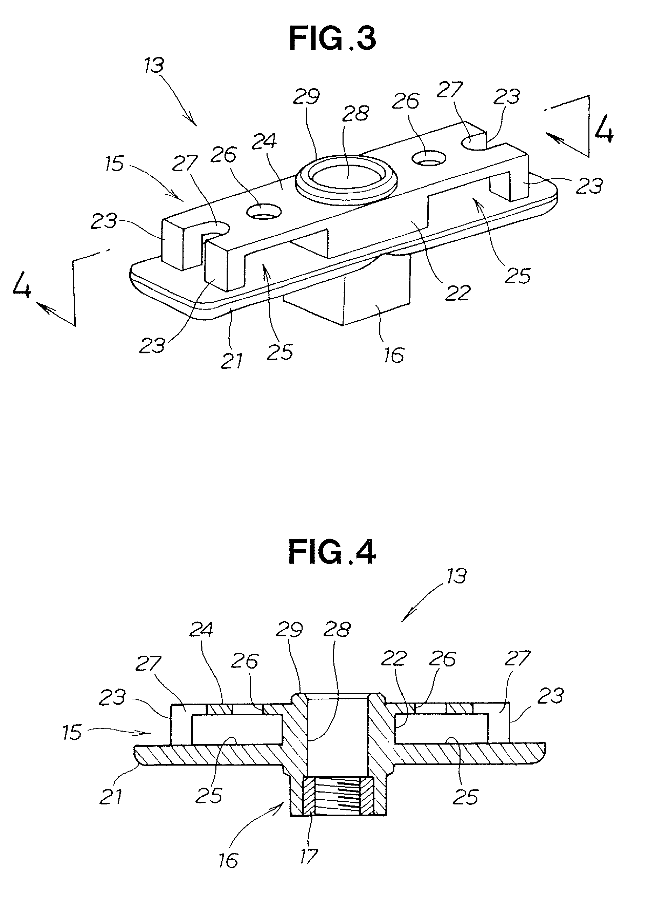

As shown in FIG. 3, the embedded section 15 of the resin piece 13 is a molded-resin article comprising a flat rectangular flange 21, a central post 22 provided upright to a center of the flange 21, four support posts 23 provided in an upright orientation to edge parts of the flange 21, and a bridge part 24 spanning an upper end of each of the support posts 23 and the central post 22. Open spaces 25, 25 are formed so as to be surrounded by the bridge part 24, the support posts 23, the central post 22, and the flange 21. The bridge part 24 has through-holes 26, 27 that communicate with the open spaces 25.

The relationship between the open spaces 25 and the through-holes 26, 27 is clearly illustrated in FIG. 4. The metal nut 17 is integrally formed with the projection section 16 of the resin piece 13. A hole 28 for receiving the distal end of the screw threaded into the metal nut 17 is formed through the central post 22. An annular boss 29 for use in a labyrinth seal is provided to the upper end of the central post 22. Instead of having an annular shape, the boss 29 may have a helical, radial, or any other desired shape.

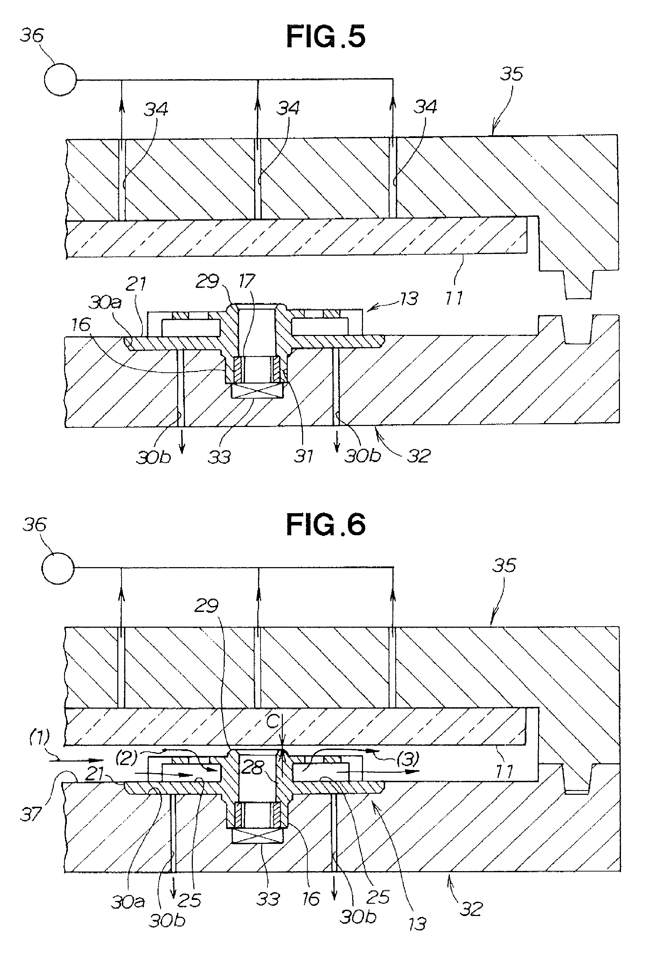

A method for producing the molding-furnished glass will now be described with reference to FIGS. 5 to 8.

FIG. 5 shows a step for positioning the resin piece 13 and the glass base material 11 after a preparation step. For purposes of convenience, a mold comprises a first die 32 and a second die 35.

First, the first die 32 is prepared. The first die 32 comprises a groove 30a into which the flange 21 fits, chucking holes 30b, 30b for holding the flange 21 onto a bottom surface of the groove 30a using suction, and a die concavity 31 for receiving the projection section 16.

A magnet 33 for attracting the metal nut 17 is preferably provided to the bottom of the die concavity 31. The flange 21 is fitted into the groove 30a, and the resin piece 13 is positioned in the first die 32 so that the die concavity 31 receives the projection section 16. A vacuum pump is then operated and the flange 21 is held by suction through the chucking holes 30b, 30b. The magnet 33 may be either a permanent magnet or an electromagnet.

The second die 35, which comprises chucking holes 34 for holding the glass base material 11 using suction, is prepared parallel to the first die 32. Reference numeral 36 represents a vacuum pump. The glass base material 11 is then positioned in the second die 35. The suction effect from the chucking holes 34 causes the glass base material 11 to adhere to the second die 35. As a result, the second die 35 may be positioned as an upper mold. The resin piece 13 and the glass base material 11 may be disposed only on the first die 32 (or the second die 35).

FIG. 6 shows steps from a mold-clamping step to a resin injection step. The second die 35 is clamped to the first die 32, so that the boss 29 of the resin piece 13 and the glass base material 11 come near to each other. Only a gap C (approximately 0.5 mm) is left between a lower surface of the glass base material 11 and the boss 29 used for a labyrinth seal. As a result, clamping can be reliably performed.

Next, molten resin is injected inside a cavity 37 formed between the first die 32 and the second die 35. When injected, the molten resin flows as indicated by the arrow (1), and pushes the flange 21 downward. This action causes the flange 21 to adhere to the first die 32, and there is no concern that resin will seep out between the flange 21 and the first die 32.

Some of the molten resin will move toward the boss 29; however, the gap between the boss 29 and the glass base material 11 is small; i.e., approximately 0.5 mm. Molten resin has the property of flowing through areas of low resistance. With viscosity added to this characteristic, the molten resin will be blocked by the action of the labyrinth seal of the boss 29. As a result, there is no concern that the molten resin will flow into the hole 28, and even if it were to do so, the amount would be insignificant. When the hole 28 is not a through-hole, the boss 29 need not be provided.

The molten resin flows as shown by arrows (2), (3) and fills the open spaces 25, 25. As long as the resin flows into the open spaces 25, 25, the resin piece 13 will be firmly bonded to the resin molding.

The projection section 16 may be a cylindrical post, but is preferably a rectangular post, as shown in FIG. 3. As long as the projection section 16 is rectangular, there will be no concern that the resin flow indicated by the arrow (1) will cause the resin piece 13 to rotate about the projection section 16, and the resin piece 13 can be kept in a predetermined orientation.

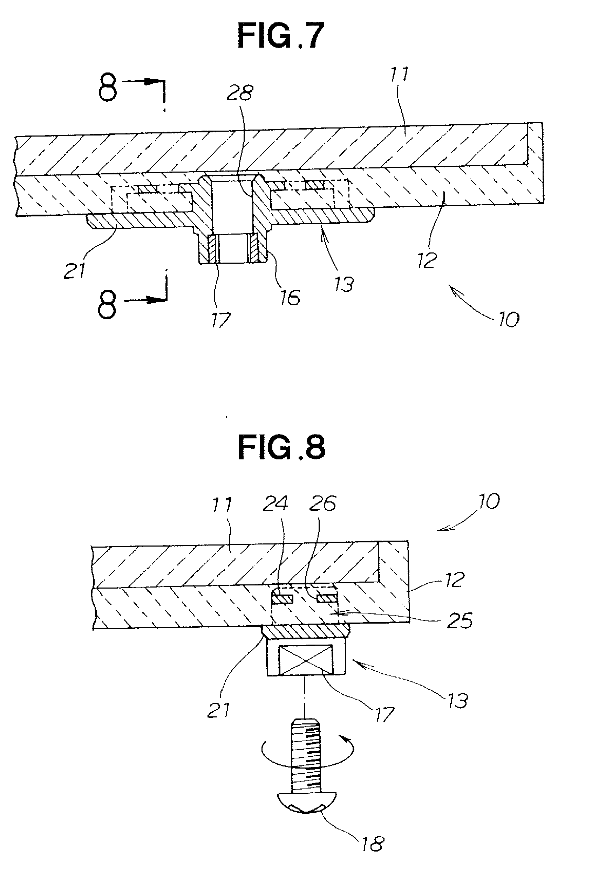

FIG. 7 shows a completed glass 10 with molding. The resin molding 12 covers the glass base material 11, and the resin piece 13 is embedded in the resin molding 12. The resin does not encase the flange 21 on its bottom surface ("bottom" being the orientation shown in the drawing); therefore, the appearance of the resin piece 13 is improved.

As shown in FIG. 8, the resin molding 12 flows into the through-hole 26 and the open spaces 25, and the resin piece 13 is firmly bonded to the resin molding 12. Therefore, the screw 18 can be adequately tightened in the metal nut 17.

In conventional practice, the technician will prepare a metal insert having a female thread, and provide a support pin that extends from the mold. The metal insert is supported in the mold with the support pin inserted in the female thread, in which state the molten resin is injected. Once the resin has cured, the mold is opened and the molding-furnished glass is removed. It is necessary for the direction in which the support pin is removed to correspond to the direction in which the mold is opened, because it will then be possible to open the mold smoothly.

It has thus been necessary in conventional practice for the central axis of the female thread to correspond to the direction in which the mold is opened, and there has been no latitude concerning the orientation of the female thread. However, it is evident that molding-furnished glass could be more suitably designed if the orientation of the female thread could be set unrestrictedly; i.e., without being limited to the direction in which the mold is opened. Accordingly, several embodiments of the present invention that address this issue will now be described.

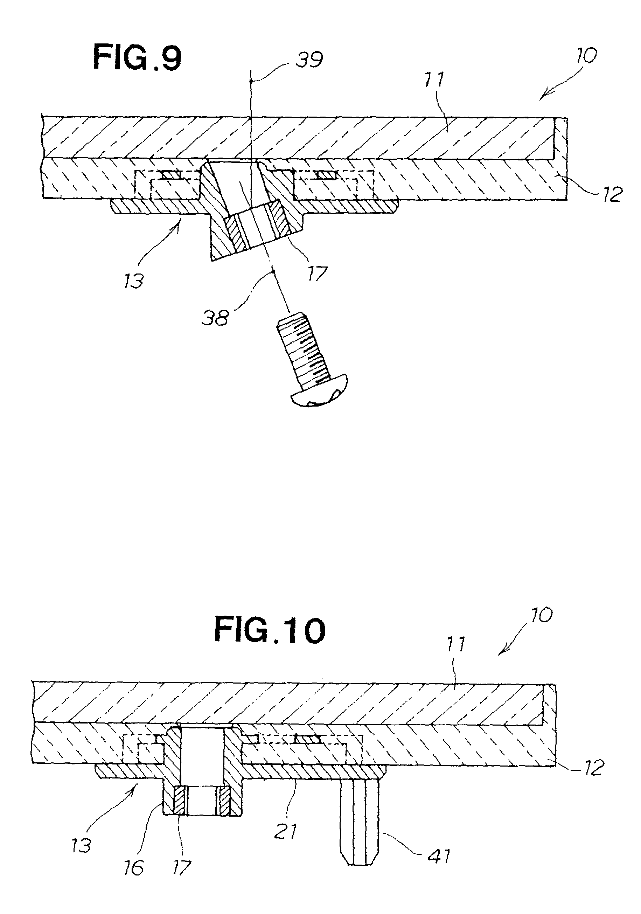

FIG. 9 shows the resin piece 13 according to a second embodiment. A central axis 38 of the metal nut 17 is set at an incline so as not to be parallel to a direction 39 in which the mold opens (opening and closing axis). Specifically, since it is possible to perform insert molding with the metal nut 17 at a slanted attitude, the shape of the resin piece 13 can be set as desired.

As long as there is latitude in determining the orientation of the metal nut 17, it is possible for there to be a higher degree of latitude in the shape and design of the glass 10 with molding.

FIG. 10 shows the resin piece 13 according to a third embodiment. Another projecting object 41 that is distinct from the projection section 16 protrudes from the embedded section (specifically the flange 21). The projecting object 41 is, e.g., a registering pin. If the registering pin or other projecting object 41 is integrated with the resin piece 13, it will be possible to use fewer components than when the registering pin and the resin piece 13 are embedded separately in the resin molding 12.

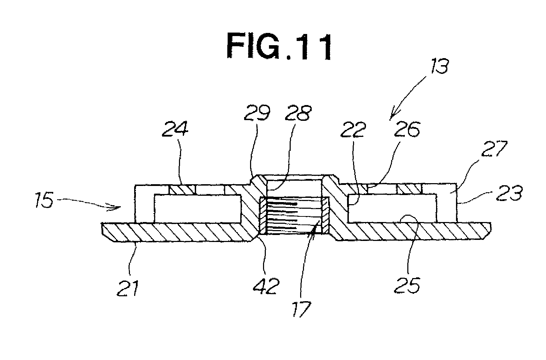

FIG. 11 shows the resin piece 13 according to a fourth embodiment. A projection section (the projection section 16 in FIG. 4) is not provided, but a concave section 42 is provided, the concave section 42 being a portion of the flange 21 joined to the hole 28 and having a concave shape. The metal nut 17 is provided to an interior of the hole 28.

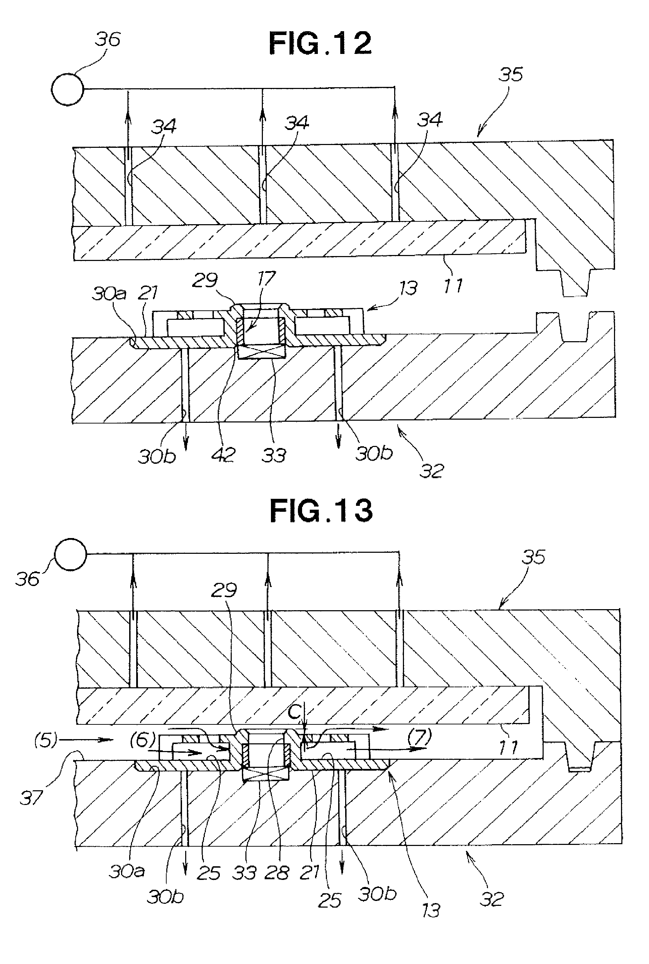

FIG. 12 shows a step for positioning the resin piece and the glass base material after a preparation step according to the fourth embodiment. First, the first die 32 is prepared. The first die 32 comprises a groove 30a into which the flange 21 fits, and chucking holes 30b, 30b for holding the flange 21 onto a bottom surface of the groove 30a using suction.

A magnet 33 for attracting the metal nut 17 is preferably provided to the bottom of the groove 30a. The flange 21 is fitted into the groove 30a, and the resin piece 13 is positioned in the first die 32. A vacuum pump is then operated and the flange 21 is held by suction through the chucking holes 30b, 30b. The magnet 33 may be either a permanent magnet or an electromagnet.

The second die 35, which comprises chucking holes 34, 34 for holding the glass base material 11 using suction, is prepared parallel to the first die 32. Reference numeral 36 represents a vacuum pump. The glass base material 11 is then placed on the second die 35. The suction effect from the chucking holes 34 causes the glass base material 11 to adhere to the second die 35. As a result, the second die 35 may be positioned as an upper mold. The resin piece 13 or the glass base material 11 can be disposed exclusively on the first die 32 (or the second die 35).

FIG. 13 is a drawing illustrating steps from a mold-clamping step to a resin injection step, according to the fourth embodiment of the present invention. The second die 35 is clamped to the first die 32, so that the boss 29 of the resin piece 13 and the glass base material 11 come near to each other. Only a gap C (approximately 0.5 mm) is left between a lower surface of the glass base material 11 and the boss 29 used for a labyrinth seal. As a result, clamping can be reliably performed.

Next, molten resin is injected inside the cavity 37 formed between the first die 32 and the second die 35. When injected, the molten resin flows as indicated by the arrow (5), and pushes the flange 21 downward. This action causes the flange 21 to adhere to the first die 32, and there is no concern that resin will seep out between the flange 21 and the first die 32.

Some of the molten resin will move toward the boss 29; however, the gap between the boss 29 and the glass base material 11 is small; i.e., approximately 0.5 mm. Molten resin has the property of flowing through areas of low resistance. With viscosity added to this characteristic, the molten resin will be blocked by the action of the labyrinth seal of the boss 29. As a result, there is no concern that the molten resin will flow into the hole 28, and even if it were to do so, the amount would be insignificant. When the hole 28 is not a through-hole, the boss 29 need not be provided.

The molten resin flows as shown by arrows (6), (7) and fills the open spaces 25, 25. As long as the resin flows into the open spaces 25, 25, the resin piece 13 will be firmly bonded to the resin molding.

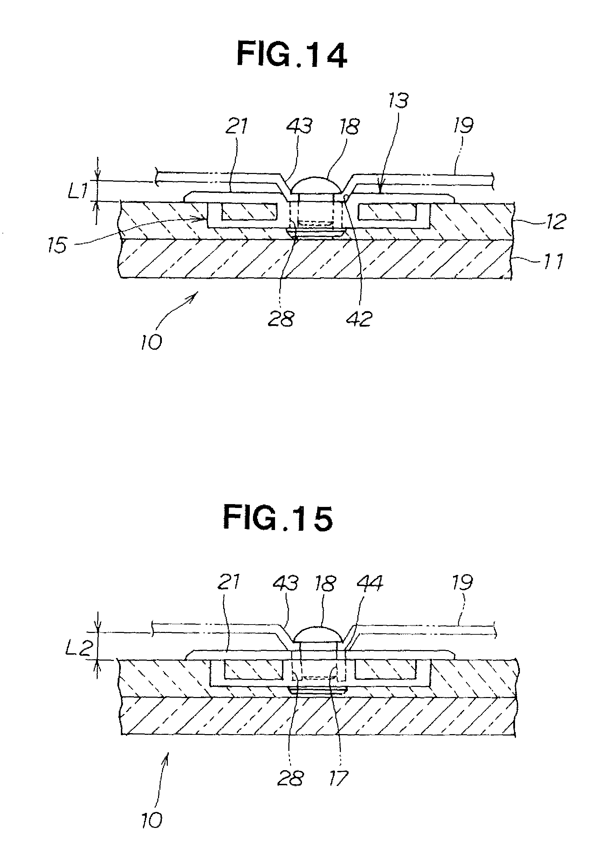

FIG. 14 shows the glass 10 with molding according to the fourth embodiment in a state of application. In the fourth embodiment, a projection section (the projection section 16 in FIG. 4) is not provided, and a concave section 42 is provided, the concave section 42 being a portion of the flange 21 joined to the hole 28 and having a concave shape. A gap L1 between the glass 10 with molding and the vehicle body 19 can be reduced. Reducing the gap L1 between the glass 10 with molding and the vehicle body 19 enables the appearance of the vehicle body 19 to be improved.

In addition, having a portion of the vehicle body 19 fastened to the molding-furnished glass 10 be a body concavity 43 of recessed construction enables the head of the screw 18 to be kept from protruding toward the exterior. Since the head of the screw 18 does not protrude toward the exterior, the appearance of the vehicle body 19 can be further improved.

FIG. 15 shows the glass 10 with molding according to a fifth embodiment. A projection section (the projection section 16 in FIG. 2) is not provided, the portion of the flange 21 joined to the hole 28 is fashioned as a section 44 having a flat structure, and the metal nut 17 is provided to the interior of the hole 28. A gap L2 between the glass 10 with molding and the vehicle body 19 can be reduced. Reducing the gap L2 between the glass 10 with molding and the vehicle body 19 enables the appearance of the vehicle body 19 to be improved..

In addition, having a portion of the vehicle body 19 fastened to the molding-furnished glass 10 be a body concavity 43 of recessed construction enables the head of the screw 18 to be kept from protruding toward the exterior. Since the head of the screw 18 does not protrude toward the exterior, the appearance of the vehicle body 19 can be further improved.

The molding-furnished glass of the present invention may be produced using a method other than the production method of the present invention.

### INDUSTRIAL APPLICABILITY

The present invention may be suitably used as a molding-furnished glass installed in a vehicle.

## Claims

1. A molding-furnished glass comprising:
a glass base material;
a resin molding covering an edge of the glass base material; and
a resin piece partially embedded in the resin molding,
**characterized in that** the resin piece has an embedded section embedded in the resin molding and a projection section projecting from the resin molding in a direction away from the glass base material, a female thread is disposed inside the projection section, and a hole for receiving a distal end of a screw to be threaded with the female thread is formed in the embedded section to extend toward the glass base material.

2. The molding-furnished glass of claim 1, wherein the embedded section has a flange designed to be brought into firm contact with a mold upon forming of the resin molding.

3. The molding-furnished glass of claim 1, wherein the embedded section has an open space into which molten resin is directed upon forming of the resin molding.

4. The molding-furnished glass of claim 1, wherein the female thread is provided in an inclined fashion so that a central axis of the female thread lies non-parallel to a direction of opening of a mold.

5. The molding-furnished glass of claim 1, wherein the embedded section has a projecting object formed to protrude from the embedded section.

6. The molding-furnished glass of claim 1, wherein the embedded section has a boss for preventing molten resin from flowing into the hole that receives the distal end of the screw.

7. A molding-furnished glass comprising:
a glass base material;
a resin molding covering an edge of the glass base material; and
a resin piece partially embedded in the resin molding,
wherein the resin piece has a female thread and a hole for receiving a distal end of a screw for threading with the female thread, the hole being formed to extend toward the glass base material.

8. The molding-furnished glass of claim 7, wherein the resin piece has a flange adapted to be brought into firm contact with a mold upon forming of the resin molding.

9. The molding-furnished glass of claim 7, wherein the resin piece has an open space into which molten resin is directed upon forming of the resin molding.

10. The molding-furnished glass of claim 7, wherein the female thread is provided in an incline fashion so that a central axis of the female thread lies non-parallel to a direction of opening of a mold.

11. The molding-furnished glass of claim 7, wherein the resin piece has a projecting object formed to protrude from the resin molding.

12. The molding-furnished glass of claim 7, wherein the resin piece has a boss for preventing molten resin from flowing into the hole that receives the distal end of the screw.

13. A method for producing a molding-furnished glass comprised of a glass base material, a resin molding covering an edge of the glass base material, and a resin piece partially embedded in the resin molding, the method comprising the steps of:
providing a resin piece having an embedded section to be embedded in the resin molding, and a projection section protruding from the resin molding in a direction away from the glass base material, wherein a female thread is disposed inside the projection section, and the embedded section has an open space into which molten resin is directed upon forming of the resin molding;
positioning the resin piece in the mold such that a flange formed in the embedded section fits in a groove, and disposing the glass base material in a predetermined location in the mold;
clamping the mold such that the resin piece and the glass base material come near to each other; and
injecting molten resin into a cavity of the clamped mold, and causing the molten resin to solidify.

14. The method of claim 13, further comprising the step of creating chucking holes on a bottom surface of the groove of the mold, for holding the flange using suction, and the step for positioning the resin piece in the mold includes holding the flange by suction through the chucking holes, so that the resin piece is secured to the mold.

15. A method for producing a molding-furnished glass comprised of a glass base material, a resin molding covering edges of the glass base material, and a resin piece partially embedded in the resin molding, the method comprising the steps of:
providing on the resin molding a resin piece having a female thread, and a hole for receiving a distal end of a screw threaded into the female thread, the hole being formed to face the glass base material;
positioning the resin piece in a mold so that a flange formed in the resin piece fits in a groove, and disposing the glass base material in a predetermined location in the mold;
clamping the mold so that the resin piece and the glass base material come near to each other; and
injecting molten resin into a cavity of the clamped mold, and causing the molten resin to solidify.

16. The method of claim 15, further comprising the step of chucking holes on a bottom surface of the groove of the mold, for holding the flange using suction, and the step for positioning the resin piece in the mold includes holding the flange by suction through the chucking holes, so that the resin piece is secured to the mold.
